(19)

**Europäisches Patentamt**

**European Patent Office**

**Office européen des brevets**

(11) **EP 2 930 033 A1**

(12) **EUROPEAN PATENT APPLICATION**

(43) Date of publication:
14.10.2015 Bulletin 2015/42

(51) Int Cl.:
*B60C 1/00* *(2006.01)* *C08J 3/22* *(2006.01)*
*C08L 9/00* *(2006.01)*

(21) Application number: 15156388.9

(22) Date of filing: 24.02.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 03.03.2014 JP 2014040602

(71) Applicant: **SUMITOMO RUBBER INDUSTRIES, LTD.**
**Kobe-shi, Hyogo-ken, 651-0072 (JP)**

(72) Inventor: **Kojima, Ryoji**
**Kobe-shi, Hyogo, 651-0072 (JP)**

(74) Representative: **Manitz, Finsterwald & Partner GbR**
**Martin-Greif-Strasse 1**
**80336 München (DE)**

(54) **Studless winter tire**

(57) Provided is a studless winter tire achieving balanced improvements in abrasion resistance and performance on snow and ice. The studless winter tire includes a cap tread formed from a rubber composition, the rubber composition containing a rubber component including natural rubber and polybutadiene rubber, an aromatic oil, and silica, the rubber component including the natural rubber and the polybutadiene rubber in a combined amount of 30 to 100 mass% per 100 mass% of the rubber component, the rubber composition containing, per 100 parts by mass of the rubber component, 20 to 80 parts by mass of the aromatic oil and 15 to 80 parts by mass of the silica, the rubber composition being prepared by mixing the natural rubber, the aromatic oil, and a masterbatch prepared by mixing the polybutadiene rubber and the silica.

EP 2 930 033 A1

**Description**

TECHNICAL FIELD

The present invention relates to a studless winter tire.

BACKGROUND ART

Studded tires or snow chains were used for driving on snowy and icy roads; however, they unfortunately cause environmental problems, such as dust pollution. Thus, studless winter tires have been developed as alternative tires for driving on snowy and icy roads. Since studless winter tires are for use on snowy roads with rougher surfaces than normal roads, the materials and structure thereof are specially designed. For example, a rubber composition that contains a diene rubber having excellent low-temperature properties, and a rubber composition that contains a large amount of softener to enhance the softening effect have been developed.

Attempts have been made to improve the performance on snow and ice of studless winter tires, for example, by increasing the amount of polybutadiene rubber in the rubber composition. However, if the amount of polybutadiene rubber is excessively increased, mobility in the rubber is too high, thereby causing blooming of chemicals. Thus, there is a limit to the amount of polybutadiene rubber that can be increased. Additionally, if the amount of polybutadiene rubber is increased, the proportion of natural rubber in the rubber composition is reduced with the increase of the amount of polybutadiene rubber. Thus, the rubber composition has the problems of poor rubber strength and deteriorated abrasion resistance.

In order to solve the above problems, for example, Patent Literature 1 discloses a rubber composition for a studless winter tire which contains large amounts of silica and a softener. However, there is still room for improvement in terms of simultaneously providing performance on snow and ice and abrasion resistance.

CITATION LIST

PATENT LITERATURE

Patent Literature 1: JP 2012-224864 A

SUMMARY OF INVENTION

TECHNICAL PROBLEM

The present invention has been made in view of the above situation and aims to provide a studless winter tire achieving balanced improvements in abrasion resistance and performance on snow and ice.

SOLUTION TO PROBLEM

The present invention relates to a studless winter tire, including a cap tread formed from a rubber composition, the rubber composition containing a rubber component including natural rubber and polybutadiene rubber, an aromatic oil, and silica, the rubber component including the natural rubber and the polybutadiene rubber in a combined amount of 30 to 100 mass% per 100 mass% of the rubber component, the rubber composition containing, per 100 parts by mass of the rubber component, 20 to 80 parts by mass of the aromatic oil and 15 to 80 parts by mass of the silica, the rubber composition being prepared by mixing the natural rubber, the aromatic oil, and a masterbatch prepared by mixing the polybutadiene rubber and the silica.

Preferably, the rubber composition contains, per 100 parts by mass of the rubber component, 30 to 80 parts by mass of the aromatic oil and 30 to 80 parts by mass of the silica.

Preferably, the rubber composition further contains carbon black, and a proportion of the silica based on 100 mass% in total of the silica and the carbon black is 50 mass% or more.

ADVANTAGEOUS EFFECTS OF INVENTION

The present invention provides a studless winter tire including a cap tread formed from a rubber composition which contains a rubber component including certain amounts of natural rubber and polybutadiene rubber, and certain amounts of an aromatic oil and silica and which is prepared from a masterbatch prepared by mixing the polybutadiene rubber and the silica. Thus, the studless winter tire achieves balanced improvements in abrasion resistance and performance on snow and ice (grip performance on ice and snow).

DESCRIPTION OF EMBODIMENTS

The studless winter tire of the present invention includes a cap tread formed from a rubber composition that contains a rubber component including natural rubber and polybutadiene rubber, an aromatic oil, and silica. The cap tread refers to an outer surface part of a multi-layered tread. In the case where the tread is a double-layered tread, it consists of an outer surface layer (cap tread) and an inner surface layer (base tread).

In the present invention, the rubber composition contains a rubber component including certain amounts of natural rubber and polybutadiene rubber, and certain amounts of an aromatic oil and silica. This leads to balanced improvements in abrasion resistance and performance on snow and ice.

Also, the rubber composition is prepared by mixing the natural rubber, the aromatic oil, and a masterbatch prepared by mixing the polybutadiene rubber and silica. In general, rubber compositions are prepared by mixing their components with a Banbury mixer. However, when all the components are mixed together, silica will be distributed locally towards the natural rubber phase, which limits dispersion of silica in the rubber composition. Thus, this method also has limited effects in improving abrasion resistance and performance on snow and ice. In contrast, when polybutadiene rubber and silica are mixed in advance to prepare a masterbatch and the masterbatch is then mixed with natural rubber and an aromatic oil, as in the present invention, distribution of silica locally towards the natural rubber phase can be suppressed and the dispersibility of silica can be improved. Therefore, abrasion resistance and performance on snow and ice can be improved.

In the rubber composition, natural rubber (NR) and polybutadiene rubber (BR) are used in combination as the rubber component. This combined use provides improved low-temperature properties and improved performance on snow and ice. In particular, polybutadiene rubber is a key component for ensuring performance on snow and ice.

Examples of NR include generally used natural rubbers, such as TSR20 and RSS#3.

In the rubber composition, the amount of NR per 100 mass% of the rubber component is preferably 30 mass% or more, more preferably 40 mass% or more, and still more preferably 50 mass% or more. If the amount of NR is less than 30 mass%, then tensile strength may be greatly reduced and abrasion resistance may not be easily ensured. The amount of NR per 100 mass% of the rubber component is preferably 80 mass% or less, more preferably 70 mass% or less, and still more preferably 65 mass% or less. If the amount of NR is more than 80 mass%, the low-temperature properties needed for studless winter tires may not be ensured and thus the resulting studless winter tire may fail to exert its performance on snow and ice.

BR is not particularly limited, and examples thereof include high cis BRs such as BR730 and BR51 manufactured by JSR Corporation, BR1220 manufactured by ZEON CORPORATION, and BR130B, BR150B and BR710 manufactured by Ube Industries, Ltd.; and low cis BRs such as BR1250H manufactured by ZEON CORPORATION. These may be used alone or in combination of two or more.

The cis content in BR is preferably 80 mass% or more, more preferably 85 mass% or more, still more preferably 90 mass% or more, and particularly preferably 95 mass% or more. Using such BR, better performance on snow and ice can be achieved.

The cis content values herein are calculated by infrared absorption spectrum analysis.

In the rubber composition, the amount of BR per 100 mass% of the rubber component is preferably 10 mass% or more, more preferably 20 mass% or more, still more preferably 30 mass% or more, and particularly preferably 50 mass% or more. If the amount of BR is less than 10 mass%, the low-temperature properties needed for studless winter tires may not be ensured and thus the resulting studless winter tire may fail to exert its performance on snow and ice. The amount of BR per 100 mass% of the rubber component is preferably 80 mass% or less, more preferably 70 mass% or less, and still more preferably 60 mass% or less. If the amount of BR is more than 80 mass%, then processability may be greatly deteriorated.

In the rubber composition, the combined amount of NR and BR per 100 mass% of the rubber component is 30 mass% or more, preferably 60 mass% or more, more preferably 80 mass% or more, and most preferably 100 mass%. A higher combined amount of NR and BR provides more excellent low-temperature properties and the resulting studless winter tire can exert the required performance on snow and ice.

The rubber component in the rubber composition may include other rubbers unless the effects of the present invention are inhibited. Examples of other rubbers include polyisoprene rubber (IR), styrene-butadiene copolymer rubber (SBR), butadiene-isoprene copolymer rubber, and butyl rubber.

The rubber composition contains a relatively large amount of an aromatic oil. When a mineral oil is used, performance on snow and ice can be ensured due to its excellent low-temperature properties, but abrasion resistance is deteriorated. If the amount of mineral oil is reduced to ensure abrasion resistance, then performance on snow and ice is deteriorated due to a reduction in low-temperature properties. Thus, the use of mineral oil cannot provide both performance on snow and ice and abrasion resistance, which are opposing properties. In contrast, in the case of using an aromatic oil even in a large amount, abrasion resistance is not largely reduced. Thus, the use of an aromatic oil can provide both performance on snow and ice and abrasion resistance.

The aromatic oil may suitably have an aromatic hydrocarbon content in mass percentage of 15 mass% or more as determined in conformity with ASTM D2140, for example. This is further explained below. Process oil contains aromatic hydrocarbons ($C_A$), paraffinic hydrocarbons ($C_P$), and naphthenic hydrocarbons ($C_N$) in its molecular structure, and is roughly classified into aromatic oil, paraffinic oil, and naphthenic oil, depending on the contents $C_A$ (mass%), $C_P$ (mass%), and $C_N$ (mass%). The aromatic oil used in the present invention preferably has a $C_A$ content of 15 mass% or more, and more preferably 17 mass% or more. Also, the aromatic oil preferably has a $C_A$ content of 70 mass% or less, and more preferably 65 mass% or less.

Examples of commercially available aromatic oil products include AC-12, AC-460, AH-16, AH-24, and AH-58 manufactured by Idemitsu Kosan Co., Ltd.; and Process NC300S and Process X-140 manufactured by JX Nippon Oil & Energy Corporation.

In the rubber composition, the amount of aromatic oil per 100 parts by mass of the rubber component is 20 parts by mass or more, preferably 30 parts by mass or more, more preferably 45 parts by mass or more, and still more preferably 60 parts by mass or more. A higher amount of aromatic oil produces a greater softening effect and thus provides improved low-temperature properties and therefore improved performance on snow and ice. In contrast, if the amount of aromatic oil is excessively low, the softening effect needed for treads cannot be provided and thus the studless winter tire cannot exert its performance on snow and ice. The amount of aromatic oil is preferably 80 parts by mass or less. If the amount of aromatic oil is more than 80 parts by mass, processability, abrasion resistance, aging properties and the like may be deteriorated.

The rubber composition contains a relatively large amount of silica. The combined use of silica with an aromatic oil allows both abrasion resistance and performance on snow and ice to be achieved while improving wet grip performance which has been considered as a weakness of studless winter tires. Examples of silica include dry silica (anhydrous silica) and wet silica (hydrous silica). Particularly, wet silica is preferred because it contains a large amount of silanol groups.

The nitrogen adsorption specific surface area ($N_2SA$) of silica is preferably 40 m²/g or more, more preferably 70 m²/g or more, and still more preferably 110 m²/g or more. If the $N_2SA$ is less than 40 m²/g, reinforcing properties may be insufficient, which may result in insufficient abrasion resistance and insufficient performance on snow and ice. Also, the $N_2SA$ of silica is preferably 220 m²/g or less, and more preferably 200 m²/g or less. If the $N_2SA$ is more than 220 m²/g, such silica may not be easily dispersed, which may result in deteriorated abrasion resistance.

The $N_2SA$ values of silicas are determined by the BET method in conformity with ASTM D3037-93.

In the rubber composition, the amount of silica per 100 parts by mass of the rubber component is 15 parts by mass or more, preferably 30 parts by mass or more, and more preferably 45 parts by mass or more. The use of silica in an amount of 15 parts by mass or more allows the performance on snow and ice needed for studless winter tires to be achieved. The amount of silica is 80 parts by mass or less, preferably 70 parts by mass or less, and more preferably 60 parts by mass or less. If the amount of silica is more than 80 parts by mass, processability and workability may be deteriorated, and low-temperature properties may be reduced due to the increase in filler content.

The rubber composition preferably contains a silane coupling agent along with silica. The silane coupling agent may be any of those which have been conventionally used in combination with silica in the rubber industry. Examples thereof include sulfide silane coupling agents such as bis(3-triethoxysilylpropyl)disulfide, mercapto silane coupling agents such as 3-mercaptopropyltrimethoxysilane, vinyl silane coupling agents such as vinyltriethoxysilane, amino silane coupling agents such as 3-aminopropyltriethoxysilane, glycidoxy silane coupling agents such as γ-glycidoxypropyltriethoxysilane, nitro silane coupling agents such as 3-nitropropyltrimethoxysilane, and chloro silane coupling agents such as 3-chloropropyltrimethoxysilane. Preferred among these are sulfide silane coupling agents, with bis(3-triethoxysilylpropyl)disulfide being more preferred.

When the rubber composition contains a silane coupling agent, the amount of silane coupling agent per 100 parts by mass of silica is preferably 1 part by mass or more, and more preferably 3 parts by mass or more. If the amount of silane coupling agent is less than 1 part by mass, reinforcing properties may be insufficient, which may result in insufficient abrasion resistance and insufficient performance on snow and ice. Also, the amount of silane coupling agent is preferably 15 parts by mass or less, and more preferably 10 parts by mass or less. If the amount of silane coupling agent is more than 15 parts by mass, the resulting effect tends not to be commensurate with the increase in cost.

The rubber composition preferably contains carbon black. This provides a reinforcing effect and thus the effects of the present invention can then be better achieved. The addition of carbon black along with an aromatic oil and silica to NR and BR can lead to balanced improvements in abrasion resistance, performance on snow and ice, and wet grip performance.

The nitrogen adsorption specific surface area ($N_2SA$) of carbon black is preferably 50 m²/g or more, and more preferably 90 m²/g or more. If the $N_2SA$ is less than 50 m²/g, reinforcing properties may be insufficient, which may result in insufficient abrasion resistance and insufficient performance on snow and ice. The $N_2SA$ is preferably 180 m²/g or less, and more preferably 130 $m^2/g$ or less. If the $N_2SA$ is more than 180 $m^2/g$, such carbon black tends not to be easily dispersed, resulting in deteriorated abrasion resistance.

The $N_2SA$ of carbon black is determined in conformity with JIS K 6217-2: 2001.

The dibutyl phthalate oil absorption (DBP) of carbon black is preferably 50 ml/100 g or more, and more preferably 100 ml/100 g or more. If the DBP is less than 50 ml/100 g, reinforcing properties may be insufficient, which may result in insufficient abrasion resistance and insufficient performance on snow and ice. Also, the DBP of carbon black is preferably 200 ml/100 g or less, and more preferably 135 ml/100 g or less. If the DBP is more than 200 ml/100 g, processability and abrasion resistance may be reduced.

The DBP of carbon black is determined in conformity with JIS K 6217-4: 2001.

In the rubber composition, the amount of carbon black per 100 parts by mass of the rubber component is preferably 2 parts by mass or more, more preferably 3 parts by mass or more, and still more preferably 5 parts by mass or more. If the amount of carbon black is less than 2 parts by mass, reinforcing properties may be insufficient, which may result in insufficient abrasion resistance and insufficient performance on snow and ice. The amount of carbon black is preferably 50 parts by mass or less, more preferably 30 parts by mass or less, still more preferably 20 parts by mass or less, and particularly preferably 15 parts by mass or less. If the amount of carbon black is more than 50 parts by mass, dispersibility tends to be deteriorated and thus abrasion resistance tends to be deteriorated.

In the rubber composition, the proportion of silica based on 100 mass% in total of silica and carbon black is preferably 50 mass% or more, and more preferably 55 mass% or more. If the proportion of silica is less than 50 mass%, performance on snow and ice and abrasion resistance may not be simultaneously achieved. Also, the proportion of silica based on 100 mass% in total of silica and carbon black is preferably 95 mass% or less, more preferably 93 mass% or less, and still more preferably 90 mass% or less. If the proportion of silica is more than 95 mass%, reinforcing properties may be insufficient, which may result in insufficient abrasion resistance and insufficient performance on snow and ice.

The rubber composition may appropriately contain, in addition to the components mentioned above, compounding agents common in the tire industry, such as wax, stearic acid, zinc oxide, antioxidants, vulcanizing agents (e.g. sulfur), vulcanization accelerators and other materials.

Examples of the vulcanization accelerators include sulfenamide vulcanization accelerators, thiazole vulcanization accelerators, thiuram vulcanization accelerators, thiourea vulcanization accelerators, guanidine vulcanization accelerators, dithiocarbamate vulcanization accelerators, aldehyde-amine or aldehyde-ammonia vulcanization accelerators, imidazoline vulcanization accelerators, and xanthate vulcanization accelerators. These vulcanization accelerators may be used alone or in combination of two or more. Especially, it is preferred to use a sulfenamide vulcanization accelerator, more preferably in combination with a guanidine vulcanization accelerator (e.g. diphenylguanidine), because then the effects of the present invention can be better achieved.

Examples of the sulfenamide vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Especially, it is preferred to use CBS, more preferably in combination with a guanidine vulcanization accelerator (e.g. diphenylguanidine), because then the effects of the present invention can be better achieved.

The rubber composition is prepared by mixing natural rubber, an aromatic oil, and a masterbatch prepared by mixing polybutadiene rubber and silica. For example, the rubber composition may be suitably prepared by a method including step 1 of mixing polybutadiene rubber and silica to prepare a masterbatch and step 2 of mixing the masterbatch, natural rubber, and an aromatic oil.

(Step 1)

In step 1, polybutadiene rubber (BR) and silica are mixed to prepare a masterbatch.

The ratio of the amount of BR added in step 1 to the total amount of BR used in the process for the preparation of the rubber composition is preferably 80 mass% or more, and more preferably 100 mass%. Then the effects of the present invention can be better achieved.

The ratio of the amount of silica added in step 1 to the total amount of silica used in the process for the preparation of the rubber composition is preferably 80 mass% or more, and more preferably 100 mass%. Then the effects of the present invention can be better achieved.

The masterbatch preferably contains a silane coupling agent.

The ratio of the amount of silane coupling agent added in step 1 to the total amount of silane coupling agent used in the process for the preparation of the rubber composition is preferably 80 mass% or more, and more preferably 100 mass%.

The masterbatch may contain an aromatic oil. The aromatic oil used therein is preferably the same aromatic oil as in step 2 although it may be different from that used in step 2.

The ratio of the amount of aromatic oil added in step 1 to the total amount of aromatic oil used in the process for the preparation of the rubber composition is preferably 40 mass% or less, and more preferably 30 mass% or less.

The ratio is also preferably 5 mass% or more, and more preferably 10 mass% or more. In such cases, the effects of the present invention can be better achieved.

The mixing method in step 1 is not particularly limited. The components may be mixed with a kneading machine typically used in the rubber industry, such as a Banbury mixer, a kneader, or an open roll mill.

In step 1, the kneading temperature is preferably 110°C to 160°C, and more preferably 120°C to 150°C, and the kneading time is preferably 1 to 30 minutes, and more preferably 3 to 10 minutes. If the kneading temperature or kneading time is lower/shorter than the lower limit, the effect of dispersing silica may not be sufficiently achieved, whereas if the kneading temperature or kneading time is more/longer than the upper limit, BR is likely to be damaged during kneading, which may result in deteriorated performance on snow and ice.

(Step 2)

In step 2, the masterbatch, natural rubber (NR), and an aromatic oil are mixed.

In step 2, other rubbers that can be included in the rubber component, carbon black, wax, stearic acid, zinc oxide, an antioxidant and the like may be mixed together with the masterbatch, natural rubber, and aromatic oil.

The mixing method, kneading temperature, and kneading time in step 2 are not particularly limited and may be similar to those employed in known base kneading steps. For example, the mixing in step 2 may be performed as mentioned in step 1, for example, at a kneading temperature of 110°C to 160°C for a kneading time of 1 to 30 minutes.

(Step 3)

After steps 1 and 2, usually a final kneading step, which is for example a step of kneading the kneaded mixture obtained in step 2, a vulcanizing agent (e.g. sulfur), a vulcanization accelerator and other components with an open roll mill or the like, is performed to prepare an unvulcanized rubber composition. Then, the unvulcanized rubber composition is subjected to a vulcanization step to provide a vulcanized rubber composition.

As mentioned above, the rubber composition is used for cap treads for studless winter tires.

A multi-layered tread may be formed by preparing sheet-shaped components and assembling them into a predetermined shape, or by charging the components in an extruder having two or more rolls and forming them into two or more layers at the head outlets of the extruder.

The studless winter tire of the present invention can be prepared using the rubber composition mentioned above by a conventional method. Specifically, an unvulcanized rubber composition containing a masterbatch, natural rubber and an aromatic oil, and optionally compounding agents mentioned above is extruded into a tread shape and assembled with other tire components on a tire building machine in a conventional manner to build an unvulcanized tire. This unvulcanized tire is heated and pressed in a vulcanizer to prepare a studless winter tire of the present invention.

The studless winter tire of the present invention can be suitably used for studless winter tires for passenger vehicles.

EXAMPLES

Hereinafter, the present invention will be described in more detail by reference to examples, which are not intended to limit the scope of the present invention.

Following is the list of the chemicals used in the examples and comparative examples.

Natural rubber (NR): RSS#3

Polybutadiene rubber (BR) : BR1220 (cis content: 96 mass%) manufactured by ZEON CORPORATION

Carbon black: Seast N220 ($N_2SA$: 114 $m^2$/g, DBP: 114 ml/100 g) manufactured by Mitsubishi Chemical Corporation

Silica: Ultrasil VN3 ($N_2SA$: 175 $m^2$/g, average primary particle size: 15 nm) manufactured by Evonik Degussa

Silane coupling agent: Si75 (bis(3-triethoxysilylpropyl)disulfide) manufactured by Evonik Degussa

Aromatic oil: Process X-140 manufactured by JX Nippon Oil & Energy Corporation

Wax: Sunnoc N manufactured by Ouchi Shinko Chemical Industrial Co., Ltd.

Zinc oxide: Zinc oxide #1 manufactured by Mitsui Mining and Smelting Co., Ltd.

Stearic acid: stearic acid "Tsubaki" manufactured by NOF Corporation

Antioxidant: Antigene 6C (N-(1,3-dimethylbutyl)-N'-phenyl-p-phenylenediamine) manufactured by Sumitomo Chemical Co., Ltd.

Sulfur: powdered sulfur manufactured by Karuizawa Sulfur

Vulcanization accelerator (1): Nocceler CZ (N-cyclohexyl-2-benzothiazolyl sulfenamide) manufactured by Ouchi Shinko Chemical Industrial Co., Ltd.

Vulcanization accelerator (2): Nocceler D (N,N'-diphenylguanidine) manufactured by Ouchi Shinko Chemical Industrial Co., Ltd.

(Examples and Comparative Examples)

The materials according to each of the formulations shown in Table 1, except the sulfur and the vulcanization accelerators, were kneaded at about 150°C for five minutes with a 1. 7-L Banbury mixer manufactured by Kobe Steel, Ltd. to give a kneaded mixture (depending on the formulation, oil was added in two batches in this kneading process). Then, the sulfur and the vulcanization accelerators were added to the kneaded mixture according to each formulation in Table 1, and the mixture was kneaded with an open roll mill at about 80°C for three minutes to prepare an unvulcanized rubber composition. The unvulcanized rubber composition was formed into a tread shape and then assembled with other tire components on a tire building machine to build an unvulcanized tire. The unvulcanized tire was vulcanized at 170°C for 15 minutes to prepare a test tire (size: 195/65R15).

In the case of using a masterbatch, the masterbatch was prepared by kneading the materials according to each formulation in Table 1 at about 150°C for five minutes with a 1.7-L Banbury mixer manufactured by Kobe Steel, Ltd.

The test tires thus prepared were evaluated on the following items. The results are shown in Table 1.

(Hardness)

The hardness of rubber composition samples cut out from the tread of each test tire was measured with a hardness tester (Type A) at 0°C in conformity with JIS K 6253. Measured hardness values are shown as indices relative to that in Comparative Example 1 (=100). Higher indices indicate higher hardnesses.

(Performance on snow and ice)

The test tires of each example were mounted on a domestic front-engine, rear-wheel-drive car (2000 cc). The car was driven on ice and snow under the following conditions to evaluate the performance on snow and ice of the car as follows. Specifically, the car was driven on ice or snow, and then the brake that locks up was applied when the car was being driven at a speed of 30 km/h. The distance which the car traveled until it stopped (braking distance on ice, braking distance on snow) was measured and the results are shown as indices using the following equation. Higher indices indicate better grip performance on ice and snow.

```
(Braking performance index) = (Braking distance in
Comparative Example 1) / (Braking distance of each formulation)
× 100
```

(on ice)
Testing location: test track in Nayoro, Hokkaido, Japan Temperature: -6°C to -1°C
(on snow)
Testing location: test track in Nayoro, Hokkaido, Japan Temperature: -10°C~-2°C

(Abrasion resistance)

The test tires of each example were mounted on a domestic front-engine, front-wheel-drive car, and the car was driven a travel distance of 8000 km. Then, the groove depth of the tire tread portion was measured. The travel distance at which the tire groove depth was reduced by 1 mm was calculated and the results are shown as indices using the following equation. Higher indices indicate better abrasion resistance.

```
(Abrasion resistance index) = (Travel distance until
groove depth was reduced by 1 mm) / (Travel distance until groove
depth of tire in Comparative Example 1 was reduced by 1 mm) ×
100
```

[Table 1]

| | | | Ex.1 | Ex.2 | Ex.3 | Ex.4 | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|---|---|---|---|
| Formulation (parts by mass) | Masterbatch | BR | 50 | 50 | 50 | 70 | — | — | — | 50 | — | — | — |
| | | Silica | 60 | 40 | 80 | 60 | — | — | — | 40 | — | — | — |
| | | Silane coupling agent | 4.8 | 3.2 | 6.4 | 4.8 | — | — | — | 3.2 | — | — | — |
| | | Aromatic oil | 10 | 10 | 10 | 10 | — | — | — | 10 | — | — | — |
| | NR | | 50 | 50 | 50 | 30 | 50 | 50 | 50 | 50 | 50 | 80 | 30 |
| | BR | | — | — | — | — | 50 | 50 | 50 | — | 50 | 20 | 70 |
| | Carbon black | | 5 | 5 | 5 | 5 | 5 | 5 | 5 | 5 | 5 | 5 | 5 |
| | Silica | | — | — | — | — | 60 | 40 | 40 | — | 80 | 60 | 60 |
| | Silane coupling agent | | — | — | — | — | 4.8 | 3.2 | 3.2 | 3.2 | 6.4 | 4.8 | 4.8 |
| | Aromatic oil | | 50 | 30 | 70 | 50 | 60 | 30 | 15 | 5 | 80 | 60 | 60 |
| | Stearic acid | | 2 | 2 | 2 | 2 | 2 | 2 | 2 | 2 | 2 | 2 | 2 |
| | Zinc oxide | | 3 | 3 | 3 | 3 | 3 | 3 | 3 | 3 | 3 | 3 | 3 |
| | Antioxidant | | 2 | 2 | 2 | 2 | 2 | 2 | 2 | 2 | 2 | 2 | 2 |
| | Wax | | 2 | 2 | 2 | 2 | 2 | 2 | 2 | 2 | 2 | 2 | 2 |
| | Sulfur | | 1.5 | 1.5 | 1.5 | 1.5 | 1.5 | 1.5 | 1.5 | 1.5 | 1.5 | 1.5 | 1.5 |
| | Vulcanization accelerator (1) | | 1.5 | 1.5 | 1.5 | 1.5 | 1.5 | 1.5 | 1.5 | 1.5 | 1.5 | 1.5 | 1.5 |
| | Vulcanization accelerator (2) | | 1.0 | 1.0 | 1.0 | 1.0 | 1.0 | 1.0 | 1.0 | 1.0 | 1.0 | 1.0 | 1.0 |
| Evaluation | Hardness (0℃) | | 99 | 98 | 105 | 97 | 100 | 98 | 110 | 110 | 102 | 110 | 98 |
| | Performance on snow and ice | | 110 | 115 | 109 | 115 | 100 | 105 | 80 | 90 | 99 | 80 | 105 |
| | Abrasion resistance | | 109 | 104 | 114 | 105 | 100 | 95 | 98 | 104 | 105 | 105 | 95 |

It was demonstrated that balanced improvements in abrasion resistance and performance on snow and ice were shown in Examples 1 to 4. In contrast, Comparative Examples 1 to 3 and 5 to 7, in which the rubber composition was prepared without using a masterbatch, and Comparative Example 4, in which the amount of aromatic oil was low, were found to have inferior performance on snow and ice or inferior abrasion resistance.

**Claims**

1. A studless winter tire, comprising
a cap tread formed from a rubber composition,
the rubber composition comprising a rubber component including natural rubber and polybutadiene rubber, an aromatic oil, and silica,
the rubber component including the natural rubber and the polybutadiene rubber in a combined amount of 30 to 100 mass% per 100 mass% of the rubber component,
the rubber composition comprising, per 100 parts by mass of the rubber component, 20 to 80 parts by mass of the aromatic oil and 15 to 80 parts by mass of the silica,
the rubber composition being prepared by mixing the natural rubber, the aromatic oil, and a masterbatch prepared by mixing the polybutadiene rubber and the silica.

2. The studless winter tire according to claim 1,
wherein the rubber composition comprises, per 100 parts by mass of the rubber component, 30 to 80 parts by mass of the aromatic oil and 30 to 80 parts by mass of the silica.

3. The studless winter tire according to claim 1 or 2,
wherein the rubber composition further comprises carbon black, and
a proportion of the silica based on 100 mass% in total of the silica and the carbon black is 50 mass% or more.

Europäisches
Patentamt

European
Patent Office

Office européen
des brevets

## EUROPEAN SEARCH REPORT

Application Number

EP 15 15 6388

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 100 24 613 A1 (YOKOHAMA RUBBER CO LTD [JP]) 23 November 2000 (2000-11-23) * page 2, line 24 - line 27; claims 1,3; examples 1-2; tables 1-2 * ----- | 1-3 | INV. B60C1/00 C08J3/22 C08L9/00 |
| A,P | EP 2 746 333 A1 (SUMITOMO RUBBER IND [JP]) 25 June 2014 (2014-06-25) * paragraph [0006]; claims 1-2; example 1; table 1 * | 1-3 | |
| A | & WO 2013/057993 A1 (SUMITOMO RUBBER IND [JP]; KOJIMA RYOJI [JP]) 25 April 2013 (2013-04-25) ----- | 1-3 | |
| A | DATABASE WPI Week 200528 Thomson Scientific, London, GB; AN 2005-266733 XP002741374, & JP 2005 082620 A (YOKOHAMA RUBBER CO LTD) 31 March 2005 (2005-03-31) * abstract * ----- | 1-3 | |
| A | DATABASE WPI Week 201028 Thomson Scientific, London, GB; AN 2010-E08220 XP002741375, & JP 2010 084102 A (SUMITOMO RUBBER IND LTD) 15 April 2010 (2010-04-15) * abstract * ----- | 1-3 | TECHNICAL FIELDS SEARCHED (IPC) B60C C08J C08K C08L |

The present search report has been drawn up for all claims

| Place of search | Date of completion of the search | Examiner |
|---|---|---|
| Munich | 25 June 2015 | Höfler, Thomas |

EPO FORM 1503 03.82 (P04C01)

## ANNEX TO THE EUROPEAN SEARCH REPORT
## ON EUROPEAN PATENT APPLICATION NO.

EP 15 15 6388

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2015

| Patent document cited in search report | | Publication date | Patent family member(s) | | Publication date |
|---|---|---|---|---|---|
| DE 10024613 | A1 | 23-11-2000 | DE<br>JP | 10024613 A1<br>2001040139 A | 23-11-2000<br>13-02-2001 |
| EP 2746333 | A1 | 25-06-2014 | CN<br>EP<br>JP<br>US<br>WO | 103857743 A<br>2746333 A1<br>WO2013057993 A1<br>2014221525 A1<br>2013057993 A1 | 11-06-2014<br>25-06-2014<br>02-04-2015<br>07-08-2014<br>25-04-2013 |
| JP 2005082620 | A | 31-03-2005 | NONE | | |
| JP 2010084102 | A | 15-04-2010 | JP<br>JP | 5311956 B2<br>2010084102 A | 09-10-2013<br>15-04-2010 |

EPO FORM P0459

For more details about this annex : see Official Journal of the European Patent Office, No. 12/82

**EP 2 930 033 A1**

**Patent documents cited in the description**

- JP 2012224864 A